# EUROPEAN PATENT APPLICATION

(11) **EP 2 348 357 A2**
(43) Date of publication of application: **27.07.2011**
(21) Application number: 09824982.4
(22) Date of filing: 05.11.2009
(51) Int. Cl.: G02F 1/15

(54) **TRANSPARENT ELECTROCHROMIC PLATE AND METHOD FOR MANUFACTURE THEREOF**

(30) Priority: 05.11.2008 KR 20080109562; 04.11.2009 KR 20090106201
(71) Applicant: Park, Sun Hoo, Gwangju 502-756 (KR)
(72) Inventor: YUN, Young Hoon, Gwangju 500-100 (KR); JI, Yoo Kang, Gwangju 503-767 (KR)
(74) Representative: TER MEER - STEINMEISTER & PARTNER GbR
(86) International application number: PCT/KR2009/006475
(87) International publication number: WO 2010/053299

(57) **Abstract**

An electrochromic transparent plate which can enhance a response speed and a method for manufacturing the same are disclosed. The electrochromic transparent plate includes a pair of transparent plates spaced apart a predetermined distance from each other; a pair of transparent electrodes provided in the pair of the transparent plates, respectively; a cathodic coloration layer provided on one of the pair of the transparent electrodes, to represent a color in a cathodic state; an anodic coloration layer provided on the other one of the pair of the transparent electrodes, in opposite to the cathodic coloration layer, to represent a color in an anodic state; and an electrolyte layer provided between the cathodic coloration layer and the anodic coloration layer, to move an electron between the cathodic coloration layer and the anodic coloration layer there through as intermediate.

## Description

### [TECHNICAL FIELD]

The present invention relates to an electrochromic transparent plate and a method for manufacturing the same, more specifically, to an electrochromic transparent plate having an improved response speed and a method for manufacturing the same.

### [BACKGROUND ART]

Electrochromic devices use that a light transmission of an electrochromic material is varied by electrochemical redox action. In other words, the electrochromic devices use a principle that a color of the electrochromic material is varied by current flow if an external electrical signal is applied and such an electrochromic device has been utilized to adjust a light transmittance or a reflectance of a window glass for an architecture structure or a room mirror for an automobile. Recent, the electrochromic devices are known to have an infrared cut-off effect as well as the color variation mentioned above and they have been drawing much interest in application possibility as color saving products.

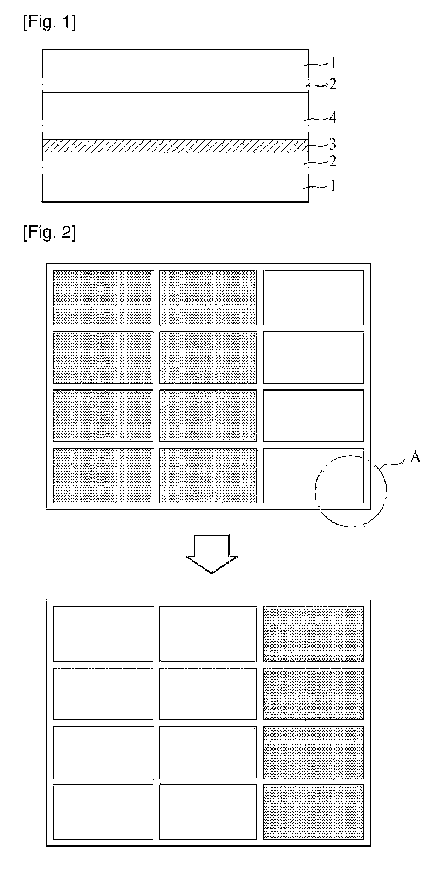

FIG. illustrates a specific example of a structure of the electrochromic device. As shown in FIG. 1, a conventional electrochromic device includes a pair of transparent plate 1, a pair of transparent electrodes 2 provided between the pair of the transparent plates 1, a color-chromic layer 3 provided between the pair of the transparent electrodes 2 and an electrolyte layer 4 provided between the pair of the transparent electrodes 2.

According to such the electrochromic device, the electrolyte layer is employed to transfer an ion and it is classified into a liquid electrolyte and a solid electrolyte, based on a physical property of the layer. It is classified into a proton electrolyte and an alkali ion electrolyte, based on a type of an ion transfer material.

An electrochromic material which can be used in the electrochromic device includes an inorganic material and an organic material. The inorganic material may include WO₃, NiOx, V₂O₅, LiNiOx, CeO₂, TiO₂ and Nb₂O₅.

The organic material has weak durability, because of degradation. It is proper to use the inorganic material in an electrochromic device for an automobile or an architecture structure which is exposed to a natural light.

Typically, a durability period of an electrochromic glass window required by the architecture structure may be 5 years, if it is assumed that the electrochromic glass window is used five times per day. Because of that, it is important to develop an electrochromic material which is stable after long time usage with excellent color-chromic efficiency and less degradation of a material used in a color variation process.

A coloring and decoloring process of the electrochromic device accompanies movement of an ion material and a color-chromic process requires a switching time performed for dozens of seconds. In addition, an indium tin oxide (ITO), which is an electrode used as current collector provided on a glass substrate, has a predetermined interfacial resistance higher than a metal material. As an area is getting larger, a color-chromic time of an electrochromic glass is getting longer.

Moreover, the conventional electrochromic device has slow color-chromic response time and little light transmittance difference between the coloring and decoloring processes. Because of that, when the area of the conventional electrochromic device is enlarged, a time difference of the color-chromic might be generated between en edge area and a center area and uniform color-chromic might be failed.

### [DISCLOSURE OF INVENTION]

### [TECHNICAL PROBLEM]

To solve the problems, an object of the present invention is to provide an electrochromic transparent plate which can enhance durability and a response speed of an electrochromic device.

### [TECHNICAL SOLUTION]

To achieve these objects and other advantages and in accordance with the purpose of the invention, as embodied and broadly described herein, an electrochromic transparent plate includes a pair of transparent plates spaced apart a predetermined distance from each other; a pair of transparent electrodes provided in the pair of the transparent plates, respectively; a cathodic coloration layer provided on one of the pair of the transparent electrodes, to represent a color in a cathodic state; an anodic coloration layer provided on the other one of the pair of the transparent electrodes, in opposite to the cathodic coloration layer, to represent a color in an anodic state; and an electrolyte layer provided between the cathodic coloration layer and the anodic coloration layer, to move an electron between the cathodic coloration layer and the anodic coloration layer there through as intermediate.

The cathodic coloration layer according to this embodiment may be formed of zinc oxide (ZnO).

Here, the cathodic coloration layer may be formed of zinc oxide (ZnO) having gallium (Ga) coated thereon.

The anodic coloration layer may be formed of at least one of vanadium V oxide (V₂O₅), iridium oxide (IrO₂), nickel oxide (NiO) and chromium III oxide (III) (Cr₂O₃).

In another aspect of the present invention, a method for manufacturing an electrochromic transparent plate includes forming a pair of transparent electrodes between a pair of transparent plates, respectively; forming a cathodic coloration layer, which represents a color in a cathodic state, on one of the transparent electrodes; forming an anodic coloration layer, which represents a color in an anodic state, on the other one of the transparent electrodes; and filling an electrolyte between the cathodic coloration layer and the anodic coloration layer.

In the forming of the pair of the transparent electrodes between the pair of the transparent plates, respectively, the pair of the transparent electrodes may be formed in a sol-gel process which mixes an organic material comprising indium (In) and an organic material comprising tin (Sn) with each other to spin-coated the mixture.

In the forming of the cathodic coloration layer, the cathodic coloration layer may be formed by sputtering-depositing zinc oxide (ZnO) on the transparent electrode.

The forming of the cathodic coloration layer may include coating gallium (Ga) on the zinc oxide (ZnO).

### [ADVANTAGEOUS EFFECTS]

The present invention has following advantageous effects.

First of all, according to the electrochromic transparent plate and the method for manufacturing the electrochromic transparent plate, a color-chromic layer for performing electrochromism is configured of the cathodic coloration layer and the anodic coloration layer. Because of that, the response speed of the electrochromisim may be enhanced advantageously.

Furthermore, to prevent the response speed from being lowered by an interfacial resistance of the transparent electrodes, the metal thin film is deposited before the transparent electrodes are formed. Because of that, the response speed may be enhanced advantageously.

A still further, the cathodic coloration layer is formed by coating the zinc oxide having the gallium coated thereon (ZnO:Ga) on the transparent electrode, with a predetermined thickness. Because of that, transparency and electrical conductivity may be enhanced advantageously.

### [BRIEF DESCRIPTION OF THE DRAWINGS]

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 is a sectional view schematically illustrating a conventional electrochromic transparent plate;
FIG. 2 is a diagram illustrating a state of an electrochromic transparent plate being used according to the present invention;
FIG. 3 is an enlarged sectional view illustrating a plurality of layers which compose an inner configuration of the electrochromic transparent plate, enlarging 'A' of FIG. 2;
FIG. 4 is a sectional view schematically illustrating an electrochomic transparent plate according to an exemplary embodiment of the present invention;
FIG. 5 is a sectional view schematically illustrating an electrochomic transparent plate according to another embodiment of the present invention;
FIG. 6 is a diagram illustrating a state of an electron which is moving on the electrochromic transparent plate according to the present invention with respect to an electrolyte layer;
FIG. 7 is a flow chart illustrating a method for manufacturing the electrochromic transparent plate according to the present invention;
FIG. 8 is data of electric resistance based on a type of a cathodic coloration layer according to an embodiment of the present invention, which is derived from experiments; and
FIG. 9 is a micrograph of a scanning electron microscope (SEM) based on a type of the cathodic coloration layer.

### [BEST MODE]

Reference will now be made in detail to the specific embodiments of the present invention, examples of which are illustrated in the accompanying drawings. Wherever possible, the same reference numbers will be used throughout the drawings to refer to the same or like parts.

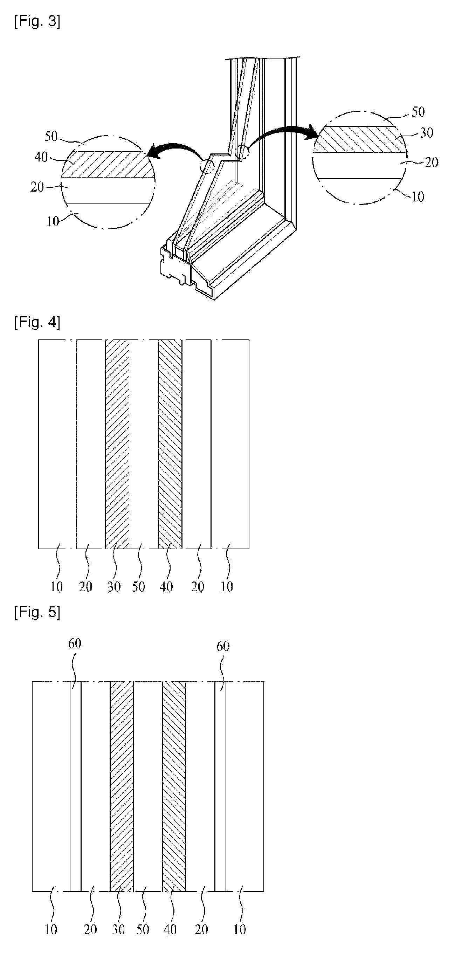

In reference to FIGS. 2 to 4, an electrochromic transparent plate according to an exemplary embodiment of the present invention will be described. Here, FIG. 2 is a diagram illustrating a state of an electrochromic transparent plate being used according to the present invention. FIG. 3 is an enlarged sectional view illustrating a plurality of layers which compose an inner configuration of the electrochromic transparent plate, enlarging 'A' of FIG. 2. FIG. 4 is a sectional view schematically illustrating an electrochomic transparent plate according to an exemplary embodiment of the present invention.

The electrochromic transparent plate according to this embodiment includes a pair of transparent plates 10 spaced apart a predetermined distance from each other, a pair of transparent electrodes 20 provided in the pair of the transparent plates 10, respectively, a cathodic coloration layer 40 provided on one of the pair of the transparent electrodes 20 to represent a color in a cathodic state, an anodic coloration layer 30 provided in the other one of the pair of the transparent electrodes 20 in opposite to the cathodic coloration layer 40, to represent a color in an anodic state, and an electrolyte layer 50 provided between the cathodic coloration layer 40 and the anodic coloration layer 30, to transfer an electron between the cathodic coloration layer 40 and the anodic coloration layer 30 there through as intermediate.

According to an actual usage example of the electrochromic transparent plate according to the present invention, an external electrical signal is applied and color-chromic is generated by current flow as shown in FIG. 2, only to adjust sunlight or to cut off an infrared.

In the electrochromic transparent plate, the pair of the transparent plates 10 may be provided, spaced apart a predetermined distance from each other as shown in FIG. 3. The anodic coloration layer 30 representing a color in an anodic state and one of the transparent electrodes 20 may be provided on the right of the electrolyte layer 50 filled between the pair of the transparent plates 10. The cathodic coloration layer 40 representing a color in a cathodic state and the other transparent electrode 20 may be provided on the left of the electrolyte layer 50.

Electrons are moved between the anodic coloration layer 30 and the cathodic coloration layer 40 via the electrolyte 50 which is an intermediate.

According to this embodiment, the transparent plate 10 may be formed of a transparent material including glass, silicon, synthetic resin and aerogel.

The transparent electrode 20 may be formed of indium tin oxide (ITO) and it is not limited thereto according to the present invention. Alternatively, the transparent electrode 20 may be formed of a transparent conductive polymer.

The cathodic coloration layer 40 generates color-chromism by using cathodic coloration which represents a color in a cathodic state with being transparent in an anodic state.

Zinc oxide having Gallium (Ga) coated thereon (ZnO:Ga) is coated on the transparent electrode 20, with a predetermined thickness, to form the cathodic coloration layer 40.

According to this embodiment, the cathodic coloration layer 40 is deposited on the transparent electrode 20 by using ultra-high purity oxygen and it is coated on the transparent electrode 20, with a thickness of approximately 1µm or 2µm.

In contrast to the cathodic coloration layer 40, the anodic coloration layer 30 generates color-chromism by using anodic coloration which represents a color in an anodic state with being transparent in a cathodic state.

According to this embodiment, the anodic coloration layer 30 may include vanadium V oxide (V₂O₅), iridium oxide (IrO₂), nickel oxide (NiO) and chromium III oxide (III)(Cr₂O₃).

However, the anodic coloration layer 30 according to the present invention is not limited thereto and it may be formed of a metal group oxide including vanadium and aluminum.

As shown in FIG. 4, the cathodic coloration layer 40 and the anodic coloration layer 30 are provided in right and left sides with respect to the electrolyte layer 50 between the transparent electrodes 20.

When an external electric signal is applied to the transparent electrodes 20, electrons are moved between the cathodic coloration layer 40 and the electrolyte layer 50 and between the anodic coloration layer 30 and the electrolyte layer 50, to generate the color-chromism in the cathodic coloration layer 40 and the anodic coloration layer 40. This color-chromism, that is, color variation will be described in detail later.

As follows, an electrochromic transparent plate according to another embodiment of the present invention will be described in reference to FIG. 5. Here, FIG. 5 is a sectional view schematically illustrating an electrochromic transparent plate according to another embodiment of the present invention.

As shown in FIG. 5, a metal thin film 60 may be further provided in the electrochromic transparent plate according to this embodiment further including the pair of the transparent plates 10 spaced apart a predetermined distance from each other, the pair of the transparent electrodes 20 provided in the pair of the transparent plates 10, respectively, the cathodic coloration layer 40 provided on one of the pair of the transparent electrodes 20 to represent a color in the cathodic state, the anodic coloration layer 30 provided in the other of the transparent electrodes 20 in opposite to the cathodic coloration layer 40, to represent a color in the anodic state, and the electrolyte layer 50 provided between the cathodic coloration layer 40 and the anodic coloration layer 30, to move the electron between the cathodic coloration layer 40 and the anodic coloration layer 30 there through as intermediate. The metal thin film 60 is provided between the pair of the transparent plates 10 and the pair of the transparent electrodes 20.

The metal thin film 60 is deposited on the pair of the transparent plates 10 to reduce a color-chromic time of the electrochromic transparent plate, before forming the transparent electrodes 20 formed of indium tin oxide (ITO) as current collector.

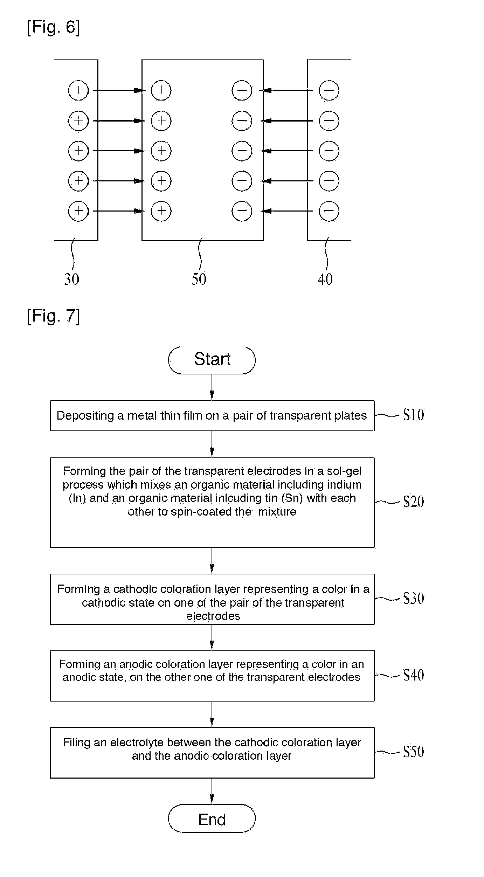

As follows, a color-chromic process of the electrochromic transparent plate according to the above embodiments of the present invention will be described in reference to FIG. 6.

In the color-chromic process of the electrochromic transparent plate as shown in FIG. 6, electrodes are carried between each of the cathodic coloration layer 40 and the anodic coloration layer 30 provided on the right and left sides of the electrolyte layer 50 and the electrolyte layer 50 filled between the pair of the transparent plates, as intermediate of electron carriage.

In other words, when an external electric signal is applied to the transparent electrodes 20 for a color-chromic process of the electrochromic transparent plate, an electron of the cathodic coloration layer 40 is transferred to the electrolyte layer 50 and the cathodic coloration layer 40 is then cathodic, to change a color.

In contrast to the cathodic coloration layer 40, an electron of the anodic coloration layer 30 is transferred to the electrolyte layer 50 and the anodic coloration layer 30 is then anodic, to change a color.

In the meanwhile, the cathodic coloration layer 40 is anodic and the anodic coloration layer 30 is cathodic, to make the electrochromic transparent plate in the color-chromic state return to the electrochromic transparent plate in a transparent state.

Next, a method for manufacturing the electrochromic transparent plate according to the present invention will be described in reference to FIG. 7. Here, FIG. 7 is a flow chart illustrating the method for manufacturing the electrochromic transparent plate according to the present invention.

The method for manufacturing the electrochromic transparent plate includes forming a pair of transparent electrodes between a pair of transparent plates, respectively (S20), forming a cathodic coloration layer representing a color in a cathodic state on one of the transparent electrodes (S30), forming an anodic coloration layer representing a color in an anodic state on the other one of the transparent electrodes (S40), and filling an electrolyte between the cathodic coloration layer and the anodic coloration layer (S50).

In the step of forming the pair of the transparent electrodes between the pair of the transparent plates, respectively, (S20), the pair of the transparent electrodes 20 may be formed when the pair of the transparent plates 10 are spaced apart a predetermined distance from each other.

The step of forming the pair of the transparent electrodes between the pair of the transparent plates, respectively (S20) further includes a step of depositing a metal thin film 60 between the pair of the transparent plates 10 before forming the transparent electrodes 20 (S10).

In the step of forming the pair of the transparent electrodes 20 between the pair of the transparent plates 10, respectively (S20), the transparent electrodes 20 may be formed in a sol-gel process.

The sol-gel process mixes an organic material including indium (In) and an organic material including tin (Sn) with each other and the mixture is spin-coated and heat-treated in a range of 500°C - 600°C.

In the step of forming the cathodic coloration layer capable of representing a color in the cathodic state on one of the pair of the transparent electrodes (S30), gallium (GA) is coated on zinc oxide (ZnO) and the zinc oxide having the gallium (GA) coated thereon is coated on the transparent electrode 20, with a predetermined thickness, to form the cathodic coloration layer 40.

The cathodic coloration layer 40 is deposited on the transparent electrode 20 by a sputtering device under an oxygen atmosphere using ultra-purity oxygen. In other words, the cathodic coloration layer 40 is coated on the transparent electrode 20, with a thickness of approximately 1µm or 2µm.

In the step of forming the anodic coloration layer capable of representing a color in the anodic state on the other one of the transparent electrodes (S40), the anodic coloration layer 30 includes vanadium V oxide (V₂O₅), iridium oxide (IrO₂), nickel oxide (NiO) and chromium III oxide (III) (Cr₂O₃) and it is not limited thereto. The anodic coloration layer 30 may be formed of metal group oxide including vanadium and aluminum.

In the step of filling the electrolyte between the cathodic coloration layer and the anodic coloration layer (S50), an electrolyte which induces flow of the electrons may be filled between the cathodic coloration layer 40 and the anodic coloration layer 30, to form the electrolyte layer 50.

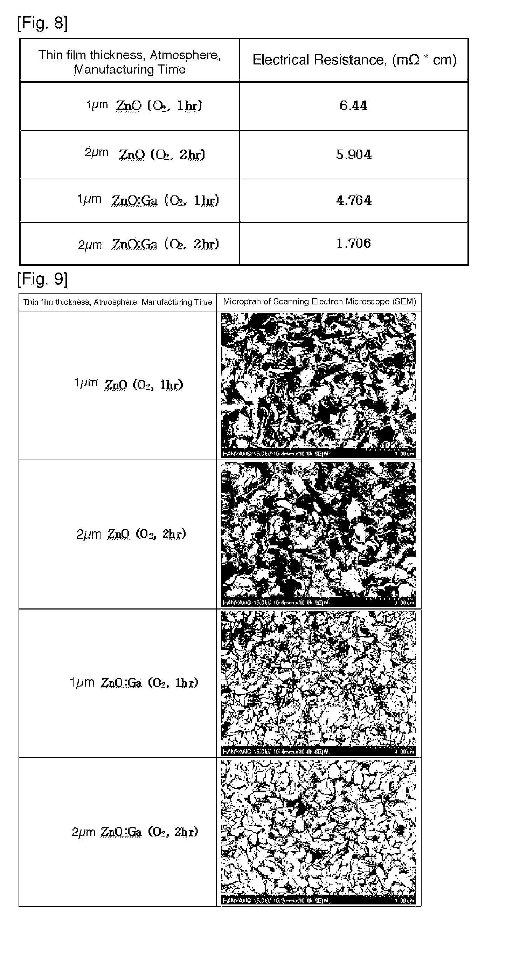

If the cathodic coloration layer 40 according to an embodiment of the present invention is formed of zinc oxide (ZnO) or the zinc oxide (ZnO) having the gallium (Ga) coated thereon (ZnO:Ga), an electric resistance is shown in FIG. 8. In other words, if it is the zinc oxide (ZnO), it is shown that the electric resistance is getting increased drastically as the cathodic coloration layer 40 is getting thicker. If it is the zinc oxide having the gallium coated thereon (ZnO:Ga), it is shown that the electric resistance is getting decreased even as the cathodic coloration layer 40 is getting thicker.

As shown in FIG. 9, the cathodic coloration layer 40 formed of the zinc oxide having the gallium coated thereon (ZnO:Ga) has a good surface state.

Based on the result of the experiments, the cathodic coloration layer 40 according to the embodiment of the present invention is the most efficient, when the zinc oxide having the gallium (Ga) coated thereon is deposited for two hours under an oxygen atmosphere until it has a thickness of 2µm.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. An electrochromic transparent plate comprising:
a pair of transparent plates spaced apart a predetermined distance from each other;
a pair of transparent electrodes provided in the pair of the transparent plates, respectively;
a cathodic coloration layer provided on one of the pair of the transparent electrodes, to represent a color in a cathodic state;
an anodic coloration layer provided on the other one of the pair of the transparent electrodes, in opposite to the cathodic coloration layer, to represent a color in an anodic state; and
an electrolyte layer provided between the cathodic coloration layer and the anodic coloration layer, to move an electron between the cathodic coloration layer and the anodic coloration layer there through as intermediate.

2. The electrochromic transparent plate as claimed in claim 1, wherein the cathodic coloration layer is formed of zinc oxide (ZnO).

3. The electrochromic transparent plate as claimed in claim 2, wherein the cathodic coloration layer is formed of zinc oxide (ZnO) having gallium (Ga) coated thereon.

4. The electrochromic transparent plate as claimed in claim 1, wherein the anodic coloration layer is formed of at least one of vanadium V oxide (V₂O₅), iridium oxide (IrO₂), nickel oxide (NiO) and chromium HI oxide (III) (Cr₂O₃).

5. A method for manufacturing an electrochromic transparent plate comprising:
forming a pair of transparent electrodes between a pair of transparent plates, respectively;
forming a cathodic coloration layer, which represents a color in a cathodic state, on one of the pair of the transparent electrodes;
forming an anodic coloration layer, which represents a color in an anodic state, on the other one of the transparent electrodes; and
filling an electrolyte between the cathodic coloration layer and the anodic coloration layer.

6. The method for manufacturing the electrochromic transparent layer as claimed in claim 5, wherein in the forming of the pair of the transparent electrodes between the pair of the transparent plates, respectively, the pair of the transparent electrodes are formed in a sol-gel process which mixes an organic material comprising indium (In) and an organic material comprising tin (Sn) with each other to spin-coated the mixture.

7. The method for manufacturing the electrochromic transparent layer as claimed in claim 5, wherein in the forming of the cathodic coloration layer, the cathodic coloration layer is formed by sputtering-depositing zinc oxide (ZnO) on the transparent electrode.

8. The method for manufacturing the electrochromic transparent layer as claimed in claim 7, wherein the forming of the cathodic coloration layer comprises,
coating gallium (Ga) on the zinc oxide (ZnO).
